# EUROPÄISCHE PATENTANMELDUNG

(11) **EP 4 432 383 A1**
(43) Veröffentlichungstag der Anmeldung: **18.09.2024**
(21) Anmeldenummer: 24154298.4
(22) Anmeldetag: 28.01.2024
(51) Int. Cl.: H01M 4/04, H01M 4/36

(54) **ELEKTRODE EINER BATTERIEZELLE**

(30) Priorität: 14.03.2023 DE 102023202264
(71) Anmelder: VOLKSWAGEN AG, 38440 Wolfsburg (DE)
(72) Erfinder: Teichert, Philipp, 38165 Lehre (DE); Kunze, Miriam, 30926 Seelze (DE); Yu, Zhihang, 38268 Lengende (DE); Hüsker, Jessica Maria, 38126 Braunschweig (DE); Ambrock, Karina, 38165 Lehre (DE); Casino, Simone, 38100 Braunschweig (DE)

(57) **Zusammenfassung**

Die Erfindung betrifft eine Elektrode (20) einer Batteriezelle (14), welche einen flachen Träger (26) aufweist, auf dem eine Schicht (28) aufgetragen ist. Die Schicht (28) umfasst mehrere zu dem Träger (26) parallele Lagen (36), die mehrere zueinander parallele erste Streifen (38) aus einem ein Aktivmaterial aufweisenden ersten Material (32) aufweist, zwischen denen zweite Streifen (40) aus einem ein Aktivmaterial aufweisenden zweiten Material (34) angeordnet sind. Zumindest abschnittsweise ist mit zunehmendem Abstand zu dem Träger (26) die Breite der ersten Streifen (38) vergrößert und die Breite der zweiten Streifen (40) verkleinert. Zudem unterscheidet sich das erste Material (32) und das zweite Material (34) hinsichtlich des jeweiligen Aktivmaterials. Ferner betrifft die Erfindung ein Verfahren (50) zur Herstellung einer Elektrode (20).

## Beschreibung

Die Erfindung betrifft eine Elektrode einer Batteriezelle und ein Verfahren zur Herstellung einer Elektrode. Die Elektrode weist einen flachen Träger auf, auf dem eine Schicht aufgetragen ist.

In zunehmendem Maße werden Kraftfahrzeuge zumindest teilweise mittels eines Elektromotors angetrieben, sodass diese als Elektrofahrzeug oder Hybridfahrzeug ausgestaltet sind. Zur Bestromung des Elektromotors wird üblicherweise eine Hochvoltbatterie herangezogen, die mehrere einzelne Batterien, auch als Batteriezellen bezeichnet, aufweist. Diese sind miteinander elektrisch in Reihe und/oder parallel geschaltet, sodass die an der Hochvoltbatterie anliegende elektrische Spannung einem Vielfachen der mittels jeder der Batteriezellen bereitgestellten elektrischen Spannung entspricht.

Jede Batteriezelle weist eine Anode, eine Kathode und einen dazwischen angeordneten Separator und einen Elektrolyten mit freibeweglichen Ladungsträgern auf. Als ein derartiger Elektrolyt wird beispielsweise eine Flüssigkeit herangezogen. In einer Alternative ist die Batteriezelle als Festkörperbatterie ausgestaltet, und der der Elektrolyt liegt als Festkörper vor. Die Anode und die Kathode, die die Elektroden der Batteriezelle bilden, umfassen üblicherweise einen Träger, der als Stromableiter fungiert. An diesem ist üblicherweise ein Aktivmaterial befestigt, das ein Bestandteil einer auf den Träger aufgebrachten Schicht ist. Hierbei ist es möglich, dass in der Schicht bereits der Elektrolyt vorhanden ist, oder dieser wird nachträglich eingebracht. Zumindest jedoch ist das Aktivmaterial zur Aufnahme der Arbeitsionen, z.B. Li-Ionen, geeignet.

Je nach Verwendung als Anode oder Kathode wird ein anderes Material für den Träger und ein unterschiedliches Material der Schicht verwendet. Die beiden Schichten der Anode und der Kathode sind üblicherweise mittels eines Separators zueinander getrennt, der beispielsweise als Membran oder Folie vorliegt. Zur erleichterten Herstellung der Anode und der Kathode wird die Schicht jeweils in einem zumindest teilweisen verflüssigten Zustand auf den Träger aufgetragen und dort mittels eines Rakels bearbeitet und ein Kalandrierprozess durchgeführt, sodass eine genau definierte Dicke der Schicht realisiert wird. Somit ist es möglich, eine Vielzahl an zueinander im Wesentlichen baugleichen Elektroden zu erstellen.

Bei der Verwendung der Batteriezellen sind zwei unterschiedliche Faktoren wichtig. Einer ist eine große Geschwindigkeit, mit der die Batteriezelle geladen werden kann, also dass die Ladungsträger vergleichsweise schnell von dem Aktivmaterial aufgenommen werden können. Der andere Faktor ist, eine große Kapazität der Batteriezelle, also dass von dem Aktivmaterial eine große Anzahl an Ladungsträgern aufgenommen werden kann. Diese beiden Eigenschaften können mittels eines einzigen Aktivmaterials nicht realisiert werden, sodass es erforderlich ist, bei der Herstellung der Batteriezelle einen Kompromiss daraus zu wählen.

Zur Abhilfe hiervon schlägt die DE 10 2020 211 651 A1 vor, in der Schicht zwei unterschiedliche Aktivmaterialien einzubetten. Das eine hiervon ist zur schnellen Aufnahme der Arbeitsionen und das andere zur Anlagerung einer großen Anzahl der Arbeitsionen geeignet. Die beiden Aktivmaterialien sind beispielsweise in unterschiedlichen, zueinander benachbarten Blöcken angeordnet. Hierbei ist es bei einem hohen Ladezustand möglich, dass die Blöcke, die für die schnelle Aufnahme der Arbeitsionen vorgesehen sind, im Wesentlichen gesättigt ist, wohingegen in den anderen Blöcken noch Kapazitäten zur Aufnahme der Arbeitsionen bereitstehen. Somit steht für das weitere Einleiten der Arbeitsionen lediglich ein Teil der Schicht zur Verfügung, weswegen der Zeitraum bis zum Erreichen des vollständigen Ladezustands noch vergleichsweise groß ist.

Der Erfindung liegt die Aufgabe zugrunde, eine besonders geeignete Elektrode einer Batteriezelle und ein besonders geeignetes Verfahren zur Herstellung einer Elektrode anzugeben, wobei vorteilhafterweise ein Verhalten während eines Betriebs vergleichmäßigt und/oder eine Leistungsfähigkeit vergrößert ist.

Hinsichtlich der Elektrode wird diese Aufgabe durch die Merkmale des Anspruchs 1 und hinsichtlich des Verfahrens durch die Merkmale des Anspruchs 8 erfindungsgemäß gelöst. Vorteilhafte Weiterbildungen und Ausgestaltungen sind Gegenstand der jeweiligen Unteransprüche.

Die Elektrode ist im bestimmungsgemäßen Zustand ein Bestandteil einer Batteriezelle und hierfür geeignet, insbesondere vorgesehen und eingerichtet. Die Elektrode ist beispielsweise eine Kathode oder besonders bevorzugt eine Anode. Die Batteriezelle umfasst vorzugsweise mehrere derartige Elektroden oder zumindest andere Elektroden. Zumindest sind die Elektroden auf Anoden und Kathoden aufgeteilt. Zwischen diesen ist im Montagezustand zweckmäßigerweise ein Separator angeordnet. Die Batteriezelle weist vorzugsweise einen Elektrolyten auf, der eine Anzahl an freibeweglichen Ladungsträger, zweckmäßigerweise Ionen, bereitstellt. Beispielsweise ist der Elektrolyt ein Bestandteil der Anode und/oder Kathode oder ist zumindest geeignet, sich dort anzulagern und somit von diesen aufgenommen zu werden. Die Batteriezelle ist beispielsweise eine Festkörperbatterie, sodass der Elektrolyt als Festkörper vorliegt. Alternativ ist der Elektrolyt flüssig. Besonders bevorzugt ist die Batteriezelle, die auch als Batterie bezeichnet wird, eine Sekundärbatterie.

Vorzugsweise ist die Batteriezelle im bestimmungsgemäßen Zustand ein Bestandteil eines Kraftfahrzeugs. Hierfür ist die Batteriezelle geeignet, insbesondere vorgesehen und eingerichtet. Im bestimmungsgemäßen Zustand ist die Batteriezelle beispielsweise ein Bestandteil eines Energiespeichers des Kraftfahrzeugs, der mehrere derartige Batteriezellen/Batterien aufweist. Die Batteriezellen sind insbesondere in einem Gehäuse des Energiespeichers angeordnet und miteinander elektrisch parallel und/oder in Reihe geschaltet. Somit ist die an dem Energiespeicher anliegende elektrische Spannung ein Vielfaches der mittels jeder der Batteriezelle bereitgestellten elektrischen Spannung. Zweckmäßigerweise sind sämtliche Batteriezelle dabei zueinander baugleich, was eine Fertigung vereinfacht. Das Gehäuse ist bevorzugt aus einem Metall gefertigt, beispielsweise einem Stahl, wie einem Edelstahl, oder einem Aluminium und/oder in einem Druckgussverfahren. Insbesondere ist das Gehäuse verschlossen ausgestaltet. Zweckmäßigerweise ist in das Gehäuse eine Schnittstelle eingebracht, die einen Anschluss des Energiespeichers bildet. Die Schnittstelle ist dabei elektrisch mit der Batteriezelle kontaktiert, sodass ein Einspeisen von elektrischer Energie und/oder eine Entnahme von elektrischer Energie aus der Batteriezelle von außerhalb des Energiespeichers möglich ist, sofern an den Anschluss ein entsprechender Stecker gesteckt ist.

Das Kraftfahrzeug ist bevorzugt landgebunden und weist vorzugsweise eine Anzahl an Rädern auf, von denen zumindest eines, vorzugsweise mehrere oder alle, mittels eines Antriebs angetrieben sind. Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Das Kraftfahrzeug weist insbesondere einen Antrieb auf, mittels dessen eine Fortbewegung des Kraftfahrzeugs erfolgt. Zum Beispiel ist der Antrieb, insbesondere der Hauptantrieb, zumindest teilweise elektrisch ausgestaltet, und das Kraftfahrzeug ist beispielsweise ein Elektrofahrzeug.

Der Elektromotor wird zum Beispiel mittels des Energiespeichers betrieben, der geeigneterweise als eine Hochvoltbatterie ausgestaltet ist. Mittels der Hochvoltbatterie wird zweckmäßigerweise eine elektrische Gleichspannung bereitgestellt, wobei die elektrische Spannung zum Beispiel zwischen 200 V und 800 V und beispielsweise im Wesentlichen 400 V beträgt. Vorzugsweise ist zwischen des Hochvoltbatterie und dem Elektromotor ein elektrischer Umrichter angeordnet, mittels dessen die Bestromung des Elektromotors eingestellt wird. In einer Alternative weist der Antrieb zusätzlich einen Verbrennungsmotor auf, sodass das Kraftfahrzeug als Hybrid-Kraftfahrzeug ausgestaltet ist. In einer Alternative wird mittels des Energiespeichers ein Niedervoltbordnetz des Kraftfahrzeugs gespeist, und mittels des Energiespeichers wird insbesondere eine elektrische Gleichspannung von 12 V, 24 V oder 48 V bereitgestellt.

In einer Alternative ist die Batteriezelle ein Bestandteil eines Flurförderfahrzeug, einer Industrieanlage, eines handgeführten Geräts, wie beispielsweise eines Werkzeugs, insbesondere eines Akkuschraubers. In einer weiteren Alternative ist die Batteriezelle ein Bestandteil einer Energieversorgung und wird dort beispielsweise als sogenannte Pufferbatterie verwendet. In einer weiteren Alternative ist die Batteriezelle ein Bestandteil eines tragbaren Geräts, beispielsweise eines tragbaren Mobiltelefons, oder eines sonstigen Wearables. Auch ist es möglich, eine derartige Batteriezelle im Campingbereich, Modellbaubereich oder für sonstige Outdoor-Aktivitäten zu verwenden.

Die Elektrode weist einen flachen Träger auf. Mit anderen Worten ist der Träger flächig und/oder weist eine hauptsächliche Ausdehnung in zwei Dimensionen auf, wobei die Ausdehnung in die verbleibende Dimension im Verhältnis vergleichsweise gering ist, und beispielsweise lediglich ein Zehntel oder ein Hundertstel oder jeweils weniger der Ausdehnung in die anderen beiden Dimensionen beträgt. Beispielsweise ist dabei der Träger eben oder alternativ insbesondere gebogen oder gewellt geformt. Der Träger ist zumindest teilweise elektrisch leitend und dient bei der Batteriezelle als Stromableiter. Der Träger weist beispielsweise zumindest teilweise ein Metall auf und ist insbesondere zumindest teilweise aus diesem gefertigt.

Beispielsweise wird als Träger eine Folie herangezogen, die mehrere Leiterbahnen aufweist. Alternativ wird als Träger ein metallisierter Blechstreifen verwendet. Besonders bevorzugt jedoch wird als Träger eine Metallfolie herangezogen. Somit weist der Träger eine vergleichsweise geringe Dicke auf, weswegen die Dicke der Elektrode und somit der Batteriezelle vergleichsweise gering ist. Somit ist ein Platzbedarf verringert. Auch ist aufgrund der Verwendung einer Metallfolie eine Verarbeitung und Lagerhaltung des Trägers und auch der Elektrode vereinfacht. Falls als Elektrode die Anode erstellt wird, ist die Metallfolie insbesondere eine Kupferfolie oder zumindest teilweise mittels Kupfers beschichtet. Falls die Elektrode die Kathode bildet, wird als Metallfolie zweckmäßigerweise eine Aluminiumfolie herangezogen. Diese besteht beispielsweise aus reinem Aluminium oder einer Aluminiumlegierung.

Auf den Träger ist eine Schicht aufgetragen. Dabei befindet sich die Schicht insbesondere auf einer Oberfläche des Trägers und ist an diesem befestigt. Somit ist mittels der Schicht und dem Träger vorzugsweise eine Schichtstruktur erstellt. Zum Beispiel ist die Dicke der Schicht zwischen 10 µm und 300 µm, zwischen 20 µm und 200 µm, zwischen 30 µm und 100 µm und vorzugsweise zwischen 40 µm und 60 µm und besonders bevorzugt zwischen 45 µm und 55 µm, wobei die Dicke insbesondere die Ausdehnung der Schicht senkrecht zur Hauptausdehnungsebene des Trägers bezeichnet. Die Schicht weist mehrere Lagen auf, die parallel zu dem Träger sind. Dabei sind die Lagen übereinander gestapelt, und vorzugsweise ausseitig miteinander bündig, sodass die Schicht im Wesentlichen quaderförmig ist. Die einzelnen Lagen sind beispielsweise zueinander abgesetzt, sodass jede Lage eine bestimmte Dicke, also Ausdehnung senkrecht zur Ausdehnungsebene des Trägers, aufweist. Besonders bevorzugt jedoch gehen die einzelnen Lagen ineinander über, und jede Lage ist insbesondere im Wesentlichen mittels eines Schnitts durch die Schicht parallel zu dem Träger gebildet oder korrespondiert zumindest hierzu.

Jede Schicht weist mehrere zueinander parallele erste Streifen auf, zwischen denen zweite Streifen angeordnet sind. Vorzugsweise ist die Anzahl der ersten Streifen und die Anzahl der zweiten Streifen über sämtliche Lagen konstant. Beispiel ist die Anzahl der ersten Streifen gleich der Anzahl der zweiten Streifen, oder die Anzahl der ersten Streifen oder zweiten Streifen ist um 1 größer als die jeweils andere Anzahl. Die ersten Streifen und die zweiten Streifen sind insbesondere abwechselnd zueinander angeordnet. Beispielsweise sind noch weitere Streifen vorhanden, die zum Beispiel jeweils zwischen den ersten und zweiten Streifen angeordnet sind. Besonders bevorzugt jedoch ist jede Lage lediglich mittels der ersten und der zweiten Streifen gebildet, die insbesondere mechanisch direkt aneinander anliegen. Die Breite jedes Streifens jeder Lage ist vorzugsweise konstant, sodass jede Lage im Wesentlichen streifenförmig ausgestaltet ist. Zumindest abschnittsweise ist mit zunehmendem Abstand zu dem Träger die Breite der ersten Streifen vergrößert, wohingegen die Breite der zweiten Streifen verkleinert ist. Vorzugsweise sind dabei die Außenmaße aller Lagen gleich, sodass diese außenseitig bündig und miteinander fluchtend angeordnet sind. Somit nimmt die Fläche jeder Lage, die den ersten Streifen zugeordnet ist, mit verringertem Abstand zu dem Träger ab, wohingegen die Fläche, die den zweiten Streifen zugeordnet ist, zunimmt.

Die ersten Streifen sind aus einem ersten Material und die zweiten Streifen und einem zweiten Material erstellt. Beispielsweise entspricht die Menge des ersten Materials der Menge des zweiten Materials, oder diese sind unterschiedlich. Insbesondere ist die Menge der beiden Materialien im Wesentlichen gleich, wobei beispielsweise ein Unterschied bis zu 10 %, 5 % oder 2 % besteht. Die Konsistenz des ersten Materials und/oder des zweiten Materials wird dabei bei Erstellung der Schicht zum Beispiel verändert. So liegen dies oder zumindest eines davon bei Auftragen zum Beispiel als Festkörper vor. Alternativ ist zumindest eines der Materialien beim Auftragen zumindest teilweise flüssig, insbesondere pastös, und zum Beispiel eine Paste oder eine Suspension. Geeigneterweise ist eines der Materialien ein sogenanntes Slurry.

Das erste Material und das zweite Material weisen jeweils ein Aktivmaterial auf. Das Aktivmaterial ist dabei vorzugsweise zum Anlagern eines/des Elektrolyten geeignet und hierfür zweckmäßigerweise vorgesehen und eingerichtet ist. Insbesondere jedoch ist das Aktivmaterial zumindest zur Aufnahme und/oder Abgabe von freibeweglichen Ladungsträgern, insbesondere Ionen, wie Lithiumionen, geeignet, vorzugsweise vorgesehen und eingerichtet. Als jeweiliges Aktivmaterial wird beispielsweise ein Lithium-Metall-Oxid, wie Lithium-Cobalt(III)-Oxid (LiCoO2), NMC, NCA oder LFP verwendet. Zum Beispiel umfasst das Aktivmaterial Silizium. Hierbei wird insbesondere in Abhängigkeit der Verwendung der Elektrode als Anode oder Kathode das jeweilige Aktivmaterial ausgesucht.

Das erste Material und das zweite Material unterscheiden sich hinsichtlich des jeweiligen Aktivmaterials. Zweckmäßigerweise ist dabei das erste Material derart angepasst, dass ein vergleichsweise schneller Ionentransport erfolgt, wohingegen das zweite Material derart angepasst ist, dass ein vergleichsweise umfangreiches Anlagen oder Aufnehmen von Lithiumionen als Arbeitsionen erfolgen kann. Mit anderen Worten ist eine Arbeitsionendichte oder mögliche Arbeitsionendichte erhöht. Zum Beispiel ist das zweite Material derart angepasst, dass ein vergleichsweise stabiles Anhaften an dem Träger erfolgt. Alternativ oder in Kombination hierzu ist im Vergleich zu dem ersten Material ein Elektronenaustausch mit dem Träger verbessert.

Bei Betrieb der Elektroden treten über das erste Material die Arbeitsionen in die Schicht ein. Von der Oberfläche der Schicht werden die Arbeitsionen in Richtung des Trägers abtransportiert, wobei diese in das zweite Material eindringen. Aufgrund der sich ändernden Breite der Streifen ist hierbei die Grenzfläche zwischen den beiden Materialien vergrößert, sodass ein Übertritt zwischen den einzelnen Materialien erleichtert ist. Mit anderen Worten ist eine vergleichsweise große Grenzfläche zwischen den beiden Materialien vorhanden, sodass ein Übergang der Arbeitsionen zwischen den beiden Materialien vereinfacht ist.

Aufgrund der sich ändernden Breiten erfolgt somit bei Betrieb zunächst zumindest vorwiegend ein Eindringen der Arbeitsionen in das erste Material, von dem die Arbeitsionen an das zweite Material abgegeben wird. Dabei ist eine größere Kontaktfläche für das Eindringen der Arbeitsionen in das zweite Material gegeben, als wenn die Schicht lediglich aus dem zweiten Material bestehen würde. Somit ist ein vergleichsweise schnelles Laden, also Einlagern von Arbeitsionen in dem zweiten Material ermöglicht, weswegen auch ein Ladevorgang der diese Elektrode aufweisenden Batteriezelle bis zum vollständigen Ladezustand beschleunigt ist, wobei die Elektrode eine vergleichsweise hohe Kapazität aufweist. Auch bei einem Entladen erfolgt ein vergleichsweise großflächiges Abgeben der Arbeitsionen an das erste Material, mittels dessen diese vergleichsweise schnell zu einer Oberfläche der Schicht abtransportiert werden. Zusammenfassend ist das Anlagern und Abgeben von Arbeitsionen im Wesentlichen unabhängig von einer Sättigung des zweiten Materials gesättigt ist, sodass ein Verhalten der Batteriezellen vergleichmäßigt ist.

Zum Beispiel weisen die Materialien zusätzlich zu dem Aktivmaterial noch weitere Komponenten auf. Vorzugsweise weist zumindest eines der Materialien, beispielsweise das erste Material oder das zweite Material, ein Lösungsmittel auf. Zweckmäßigerweise ist das Lösungsmittel der beiden Materialien gleich. Als Lösungsmittel wird beispielsweise Wasser, NMP, o- oder p-Xylol, Heptan, Dibutylether oder Toluol verwendet. Geeigneterweise wird das das Lösungsmittel aufweisende Material mittels Gießens und nachfolgenden Aushärtens auf den Träger aufgebracht. Bei dem Aushärten wird insbesondere das Lösungsmittel zumindest teilweise entfernt, sodass das jeweilige Aktivmaterial sowie etwaige weitere Bestandteile verbleiben, die geeigneterweise eine zusammenhängende Masse bilden, vorzugsweise einen Festkörper. Die Massenanteile des Aktivmaterials an dem jeweiligen Material wird zweckmäßigerweise derart eingestellt, dass sich beim anschließenden Gießen eine definierte Flächenbeladung und/oder eine gewünschte Porosität ergibt. Somit ist bei Betrieb eine ausreichende Elektrolyt-Durchtränkung sichergestellt.

Besonders bevorzugt weist zumindest eines der beiden Materialien, vorzugsweise beide Materialien, jeweils einen Binder auf. Als Binder wird beispielsweise Polybutadien oder Acrylnitril-Butadien-Kautschuk (NBR), PAA, CMC, SBR, Polyvinylidenfluorid (PVDF) oder Polyethylenglycol (PEG) eingesetzt. Beispielsweise ist der Binder der beiden Materialien gleich und zum Beispiel auch deren Konzentration. Alternativ hierzu unterscheiden sich diese. Bevorzugt besteht das erste und/oder zweite Materialien aus dem jeweiligen Binder, dem jeweiligen Lösungsmittel und dem jeweiligen Aktivmaterial.

Alternativ hierzu weist zumindest eines der Materialien oder beide Materialien, einen Zusatz auf. Hierbei ist bei einem der Materialien (z.B. dem zweiten Material) beispielsweise ein Zusatz vorhanden, der in dem anderen Material nicht vorhanden ist. Als derartiger Zusatz werden beispielsweise Nanoleitrußröhrchen herangezogen, die eine vergleichsweise hohe Elektronenleitfähigkeit aufweisen. Vorzugsweise erfolgt mittels des Zusatzes eine Bereitstellung von elektrischer Leitfähigkeit, beispielsweise für Elektronen, insbesondere sofern die Elektrode die Kathode der Batterie bildet. Somit erfolgt vorzugsweise mittels des Zusatzes zumindest teilweise eine Bereitstellung einer elektrischen Leitfähigkeit, beispielsweise eine Elektronenleitung. Der Zusatz ist somit ein Leitzusatz. Als (Leit-)Zusatz wird zum Beispiel ein Graphit, Leitruß oder ein Gemisch aus Silizium und Kohlenstoff herangezogen.

Beispielsweise sind die Materialien, mit Ausnahme des Aktivmaterials zueinander gleich. Alternativ hierzu unterscheiden sich diese zudem noch in einer weiteren der etwaigen Komponenten. Insbesondere ist mit zunehmender Dicke der Schicht die Anzahl der jeweiligen Streifen vergrößert. Sofern beispielsweise die Batteriezelle somit unterschiedlich dicke Elektroden aufweist, ist bei den dickeren Elektroden die Anzahl der Streifen insbesondere vergrößert. Beispielsweise ist die der Schicht gegenüberliegende Seite des Trägers frei. Besonders bevorzugt jedoch ist dort eine weitere Schicht aufgetragen, die beispielsweise aus einem einzigen Material erstellt ist. Besonders bevorzugt jedoch ist die weitere Schicht in gleicher Art und Weise wie die Schicht ausgestaltet und weist somit zumindest die beiden Materialien auf.

Beispielsweise ist der Zusammenhang zwischen der Breite und dem Abstand beliebig. Besonders bevorzugt jedoch liegt ein funktioneller Zusammenhang vor, sodass die Elektroden stets einen vorbestimmten Querschnitt senkrecht zur Ausdehnungsebene des Trägers und dem Verlauf der Streifen aufweisen. Beispielsweise ist der Zusammenhänge exponentiell oder folgt einer trigonometrischen Funktion. Somit ergeben sich insbesondere zumindest abschnittsweise U-förmige Bereiche, die anhand des ersten Materials bereitgestellt sind. Besonders bevorzugt jedoch liegt ein linearer Zusammenhang zwischen der Bereit und dem Abstand vor. Folglich weist der Querschnitt der Elektroden senkrecht zum Verlauf der Streifen zumindest abschnittsweise dreieckförmige/trapezförmige Zacken oder dergleichen auf, die insbesondere ineinandergreifen. Auf diese Weise ist eine Herstellung vereinfacht, und die Elektrode stets reproduzierbar herstellbar.

Beispielsweise liegt das erste Material an dem Träger an, zum Beispiel die ersten Streifen im Bereich des Trägers eine bestimmte Mindestbreite aufweisen, die insbesondere dem Dreifachen des 90 Perzentile (D90) der Partikelgröße des ersten Materials entspricht. Somit ist zumindest noch ein Mindestmaß einer direkten Beeinflussung des Trägers mittels des ersten Materials vorhanden, wobei noch eine vergleichsweise einfache Herstellung möglich ist. Alternativ hierzu weist die Schicht eine erste Abschlusslage auf, die an dem Träger anliegt. Dabei besteht die erste Abschlusslage lediglich aus dem zweiten Material. Mit anderen Worten ist das erste Material nicht in direktem mechanischem Kontakt mit dem Träger. Somit ist es beispielsweise möglich, ein Anhaften der Schicht an dem Träger und/oder ein Elektrodenaustausch mittels einer geeigneten Wahl des zweiten Materials zu verbessern, wobei mittels des ersten Materials andere Eigenschaften der Schicht bereitgestellt werden. Insbesondere weist die erste Abschlusslage eine Dicke auf, die kleine als ein Viertel der Dicke der Schicht ist. Insbesondere ist die Dicke der ersten Abschlusslage kleiner als 20 % oder 15 % der Dicke der Schicht. Insbesondere ist die Dicke der ersten Abschlusslage größer als 1% oder 2 % der Dicke der Schicht. Somit ist stets ausreichend zweites Material zur Verfügung, weswegen die gewünschte Funktion erfüllt wird, wobei dennoch eine vergleichsweise große Kontaktfläche zu dem ersten Material besteht.

Beispielsweise wird die dem Träger gegenüberliegen Oberfläche der Schicht zumindest teilweise mittels des zweiten Materials, also der zweiten Streifen, gebildet. Besonders bevorzugt jedoch ist das zweite Material von der dem Träger gegenüberliegen Oberfläche beabstandet, und die Schicht weist somit eine zweite Abschlusslage auf, die lediglich aus dem ersten Material besteht. Somit dringen bei Betrieb die Arbeitsionen lediglich über das erste Material in die Schicht ein, und lediglich über das erste Material werden die Arbeitsionen abgegeben, sodass, unabhängig vom Ladezustand, im Wesentlichen ein gleichmäßiger lonenaustausch stattfindet. Zum Beispiel ist die Dicke der zweite Abschlusslage zwischen 25 % und 1%, zwischen 20 % und 2 % und beispielsweise zwischen 15 % und 5 % der Dicke der Schicht. Somit steht ausreichend erstes Material zum (Arbeits-)lonenaustausch bereit, wobei dennoch eine vergleichsweise große Kontaktfläche zwischen den beiden Materialien vorhanden ist.

Beispielsweise sind ist die Breite sämtlicher erster Streifen jeder Lage konstant. Oder in Kombination hierzu ist die Breiten sämtlicher zweiter Streifen jeder Lage im Wesentlichen konstant. Dabei unterscheiden sich jedoch insbesondere die Breiten der ersten Streifen unterschiedlicher Lagen und die Breite der Streifen der zweite Streifen unterschiedlicher Lagen. Besonders bevorzugt ist die Breite der in einem mittleren Bereich der jeweiligen Lage angeordnet Streifen vergrößert, Beispielsweise weisen somit bei jeder entsprechenden Lage die ersten Streifen zwei unterschiedliche Breiten und/oder die zweiten Streifen zwei unterschiedliche Breiten auf, wobei die die randseitigen ersten/zweite Streifen die verringerte Breiten aufweisen. Sofern ein linearer Zusammenhang zwischen der Breite und dem Abstand besteht, weist der Querschnitt der Schicht senkrecht zum Verlauf der Streifen daher randseitig vergleichsweise spitzen Zacken auf, wohingegen diese im mittleren Bereich verbreitet sind. Zum Beispiel sind pro Lage lediglich zwei unterschiedliche Breiten vorhanden, oder es sind mehrere unterschiedliche Breiten vorhanden. Insbesondere nimmt die Breite kontinuierlich mit Zunahme der Entfernung zum Rand zu. Aufgrund der unterschiedlichen Breiten sind somit im mittleren Bereich der Schicht vergrößerte zusammenhängende Bereiche aus dem ersten Material und dem zweiten Material vorhanden, was einen Bewegungsfluss der Arbeitsionen in dem jeweiligen Material verbessert. Dahingegen sind in einem Randbereich, die Kontaktflächen zwischen dem ersten und zweiten Material vergrößert, sodass ein zügiger Austausch der Arbeitsionen erfolgt, sodass ein Ausbilden von lokalen Spannungen dort vermieden ist.

Beispielsweise ist das Aktivmaterial des ersten Materials chemisch gleich zu dem Aktivmaterial des zweiten Materials. Jedoch unterscheidet sich hierbei insbesondere der Anteil des Aktivmaterials in dem ersten Material zu dem Anteil des Aktivmaterials im zweiten Material. Alternativ oder in Kombination hierzu unterscheidet sich das Aktivmaterial anhand einer physikalischen Eigenschaft, wie beispielsweise einer Partikelgröße. Zusammenfassend sind beispielsweise die Aktivmaterialien des ersten und des zweiten Materials chemisch gleich, unterscheidet sich jedoch physikalisch, beispielsweise anhand der Morphologie, Komposition, Art, Partikelgröße oder sonstigem.

Besonders bevorzugt ist das erste das Aktivmaterial des ersten Materials unterschiedlich zu dem Aktivmaterial des zweiten Materials gewählt. Mit anderen Worten unterscheiden sich die beiden Aktivmaterialien chemisch. So ist es möglich, die gewünschten Eigenschaften, die aufgrund der beiden Materialien bereitgestellt werden sollen, vergleichsweise genau zu realisieren. So wird beispielsweise das Aktivmaterial des ersten Materials derart ausgewählt, dass eine hohe Bewegungsgeschwindigkeit für die Arbeitsionen besteht. Das Aktivmaterials des zweiten Materials ist zweckmäßigerweise derart gewählt, dass vergleichsweise viele Arbeitsionen angelagert werden können. Beispielsweise wird für eines der beiden Aktivmaterialien NMC622 und für das andere NMC811 herangezogen. Alternativ wird für eines der Aktivmaterialien NMC und für das andere NCA verwendet. Alternativ oder in Kombination hierzu umfasst eines der Aktivmaterialien LFP und/oder LMFP, wohingegen für das andere Aktivmaterial NMC verwendet wird. In einer weiteren Alternative wird bei dem einen der Aktivmaterialien Graphit verwendet.

Somit ist es möglich, Materialkosten der Elektrode bei einer geeigneten Wahl des Aktivmaterials zu reduzieren, wobei dennoch die gewünschten Eigenschaften erhalten bleiben.

Beispielsweise weisen das erste Material und das zweite Material lediglich das jeweilige Aktivmaterial auf. Alternativ hierzu weist beispielsweise das erste Material noch ein weiteres Aktivmaterial auf, sodass das erste Material ein Gemisch aus zwei unterschiedlichen Aktivmaterialien umfasst. Dabei ist es zum Beispiel möglich, falls das Aktivmaterial des ersten Materials der Schicht unterschiedlich zum Aktivmaterial des zweiten Materials ist, dass das weitere Aktivmaterial des ersten Materials gleich dem Aktivmaterial des zweiten Materials ist. Somit ist es möglich, das erste Material anhand des zweiten Materials zu erstellen, nämlich indem das entsprechende Aktivmaterial hinzugemischt wird. Folglich ist eine Herstellung erleichtert. Alternativ oder in Kombination hierzu weist beispielsweise das zweite Material das weitere Aktivmaterial auf, sodass das zweite Material ein Gemisch unterschiedlicher Aktivmaterialien umfasst. Auch hier ist es möglich, dass das weitere Aktivmaterial des zweiten Materials gleich dem Aktivmaterial des ersten Materials ist, was eine Herstellung erleichtert.

Das Verfahren dient der Herstellung einer Elektrode, die einen flachen Träger aufweist, auf dem eine Schicht aufgetragen ist. Die Schicht umfasst mehrere zu dem Träger parallele Lagen, die mehrere zueinander parallele erste Streifen aus einem ein Aktivmaterial aufweisenden ersten Material aufweist. Zwischen den ersten Steifen sind zweite Streifen aus einem ein Aktivmaterial aufweisenden zweiten Material angeordnet. Zumindest abschnittsweise ist mit zunehmendem Abstand zu dem Träger die Breite der ersten Streifen vergrößert und die Breite der zweiten Streifen verkleinert, wobei sich das erste Material und das zweite Material hinsichtlich des jeweiligen Aktivmaterials unterscheidet.

Bei dem Verfahren wird zunächst der Träger bereitgestellt. Diese liegt beispielsweise als Bogenware oder zweckmäßigerweise als Bandware vor und wird mittels entsprechender Maschinen geeigneterweise abgerollt. Auf den Träger wird zunächst das zweite Material aufgebracht. Anschließend wird auf das zweite Material das erste Material aufgebracht, wobei das erste Material zum Beispiel zusätzlich an den Träger abgestützt und somit auf diesen aufgebracht wird. Beispielsweise erfolgt das Aufbringen der beiden Materialien im Wesentlichen gleichzeitig. Besonders bevorzugt ist jedoch ein zeitlicher Abstand zwischen dem Aufbringen der beiden Materialien vorhanden. Somit ist es möglich diese entsprechend zu formen.

Beispielsweise wird das zweite Material vor dem Aufbringen des ersten Materials zunächst ausgehärtet, oder zumindest liegt das zweite Material dann als Festkörper vor. Auf diese Weise erfolgt bei Aufbringen des ersten Materials keine Verformung des zweiten Materials, sodass eine Breite der sich ergebenden Streifen nicht verändert wird.

Das erste Material wird beispielsweise mittels Druckens oder zweckmäßigerweise mittels Gießens aufgebracht, wofür beispielsweise eine Paste oder Schlämme, insbesondere ein sogenanntes Slurry, verwendet wird. Somit werden in dem zweiten Material freigelassene Bereiche sicher mittels des ersten Materials gefüllt, sodass das erste Material vergleichsweise sicher an dem zweiten Material anliegt.

Beispielsweise wird das zweite Material auf den Träger mittels Gießens aufgebracht, wobei insbesondere eine Maske oder dergleichen vorhanden ist. Im Anschluss daran wird das zweite Material ausgehärtet und die Maske entfernt. Mittels der Maske werden dabei die Bereiche frei von dem zweiten Material gehalten, in die im Anschluss hieran das erste Material eingefüllt wird. Aufgrund der Maske ist somit das Aufbringen des zweiten Materials im flüssigen oder pastösen Zustand möglich, sodass eine Herstellungsgeschwindigkeit erhöht und Herstellungskosten verringert sind. Besonders bevorzugt wird das zweite Material mittels Druckens auf den Träger aufgebracht, insbesondere mittels der 3D-Druckens. Auf diese Weise ist vergleichsweise genau die Position des zweiten Materials bestimmbar, sodass eine Genauigkeit bei der Erstellung der Bereiche, die mit dem zweiten Material gefüllt werden sollen, und der, die von dem zweiten Material freibelassen werden sollen, verbessert ist. Somit ist die Form des sich ergebenden Streifen vergleichsweise genau und somit eine Qualität der Elektrode erhöht. Beispielsweise wird nachfolgend das erste Material ebenfalls mittels Druckens oder Gießens aufgebracht.

Zum Beispiel wird die Schicht kalandriert, wobei das Kalandrieren erst erfolgt, wenn das erste und das zweite Material aufgebracht worden sind. Auf diese Weise werden diese aufeinandergepresst, sodass der lonenaustausch zwischen diesen verbessert und eine Robustheit der Schicht erhöht ist. Alternativ oder in Kombination hierzu wird das zweite Material vor dem Aufbringen des ersten Materials kalandriert. Insbesondere weist der hierfür verwendete Kalander eine Kalanderwalze auf, die die Erhebungen oder Rillen umfasst. Somit wird mittels des Kalanders insbesondere das zweite Material dreidimensional verformt, und folglich den zweiten Streifen erstellt. Im Anschluss hieran wird in die sich ergebenden Freiräume des ersten Materials gefüllt, sodass auch die ersten Streifen erstellt werden.

Die Erfindung betrifft ferner eine Batteriezelle, die eine derartige Elektrode aufweist. Beispielsweise sind hierbei sämtliche Anoden der Batteriezelle entsprechend ausgestaltet, wobei die Kathoden lediglich eine Schicht aufweisen, die aus am einzigen Material besteht. Alternativ hierzu sind auch bei den Kathoden zwei unterschiedliche Materialien vorhanden.

Die im Zusammenhang mit der Elektrode beschriebenen Vorteile und Weiterbildungen sind sinngemäß auch auf das Verfahren/die Batteriezelle sowie untereinander zu übertragen und umgekehrt.

Nachfolgend werden Ausführungsbeispiele der Erfindung anhand einer Zeichnung näher erläutert. Darin zeigen:
- Fig. 1: schematisch vereinfacht ein Kraftfahrzeug, das eine Hochvoltbatterie mit mehreren baugleichen Batteriezellen aufweist,
- Fig. 2: in einer Schnittdarstellung schematisch eine der Batteriezellen, die vier Elektroden aufweist,
- Fig. 3: in einer Schnittdarstellung ausschnittsweise eine der Elektroden,
- Fig. 4: in einer weiteren Schnittdarstellung die Elektrode,
- Fig. 5- 10: alternative Ausgestaltungsform der Elektrode gemäß Fig. 3, und
- Fig. 11: ein Verfahren zur Herstellung der Elektrode.

Einander entsprechende Teile sind in allen Figuren mit den gleichen Bezugszeichen versehen.

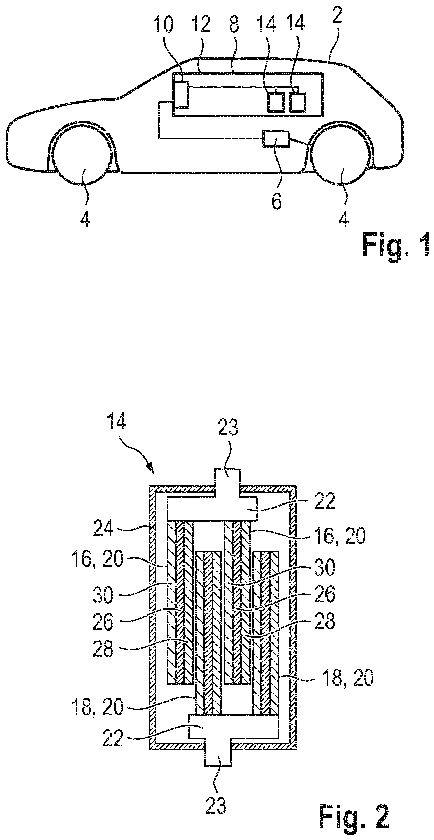

In Figur 1 ist schematisch vereinfacht ein Kraftfahrzeug 2 in Form eines Personenkraftwagens (Pkw) dargestellt. Das Kraftfahrzeug 2 weist eine Anzahl an Rädern 4 auf, von denen zumindest einige mittels eines Antriebs 6 angetrieben sind, der einen Elektromotor umfasst. Somit ist das Kraftfahrzeug 2 ein Elektrofahrzeug oder ein Hybrid-Fahrzeug. Der Antrieb 6 weist ferner einen Umrichter auf, mittels dessen der Elektromotor bestromt ist. Der Umrichter des Antriebs 6 wiederum ist mittels eines Energiespeichers 8 in Form einer Hochvoltbatterie bestromt. Hierfür ist der Antrieb 6 mit einer Schnittstelle 10 des Energiespeichers 8 verbunden, die in ein Gehäuse 12 des Energiespeichers 8 eingebracht ist, das aus einem Edelstahl erstellt ist. Innerhalb des Gehäuses 12 sind mehrere Batteriezellen 14 angeordnet, von denen zwei dargestellt sind. Die Batteriezellen 14 sind zu mehreren, nicht dargestellten Modulen zusammengefasst. Die Batteriezellen 14 jedes Moduls sind dabei teilweise elektrisch in Reihe und zueinander parallel geschaltet und in einem gemeinsamen Gehäuse angeordnet. Die Module wiederum sind miteinander elektrisch kontaktiert, wobei ein Teil der Module zueinander elektrisch in Reihe und diese wiederum elektrisch zueinander parallel geschaltet sind. Der elektrische Verband der Module und somit auch der Batteriezellen 14 ist mit der Schnittstelle 10 elektrisch kontaktiert, sodass bei Betrieb des Antriebs 6 ein Entladen der Batteriezellen 14 erfolgt. Aufgrund der elektrischen Verschaltung ist dabei die an der Schnittstelle 10 bereitgestellte elektrische Spannung, die 400 V beträgt, ein Vielfaches der mit den zueinander baugleichen Batteriezellen 14 jeweils bereitgestellten elektrischen Spannung.

In Figur 2 ist in einer Schnittdarstellung eine der zueinander baugleichen Batteriezellen 14 dargestellt. Die Batteriezelle 14 weist mehrere Anoden 16 und Kathoden 18 auf, von denen jeweils lediglich zwei dargestellt sind. Die Anoden 16 und die Kathoden 18, die die Elektroden 20 der Batteriezelle 14 bilden, sind jeweils flächig ausgestaltet und zu einem Zellstapel abwechselnd aufeinandergeschichtet, wobei zwischen jeweils benachbarten Anoden 16 und Kathoden 18 ein nicht näher dargestellter Separator angeordnet ist. Die Anoden 16 stehen auf einer gemeinsamen Seite über die Kathoden 18 über, und die Kathoden 18 stehen über die Anoden 16 auf einer anderen Seite über.

Die Überstände der Anoden 16 und der Kathoden 18 sind jeweils an einer Stromschiene 22 (Tabs) angeschweißt, die aus einem Kupfer gefertigt ist. Hierbei ist den Anoden 16 und den Kathoden 18 jeweils eine gemeinsame Stromschienen 22 zugeordnet. Die Stromschienen 22 weisen jeweils einen Anschluss 23 auf, der durch ein Zellgehäuse 24 geführt ist, innerhalb dessen die Anoden 16 und die Kathoden 18 angeordnet sind. Mit anderen Worten sind die Elektroden 20 innerhalb des Zellgehäuses 24 angeordnet. Das Zellgehäuse 24 ist starr ausgestaltet und aus einem Aluminium, also einem aluminiumhaltigen Material, gefertigt. Somit handelt es sich bei der Batteriezelle 14 um eine prismatische Zelle. Das Zellgehäuse 24 ist mit einem nicht näher dargestellten flüssigen Elektrolyten befüllt.

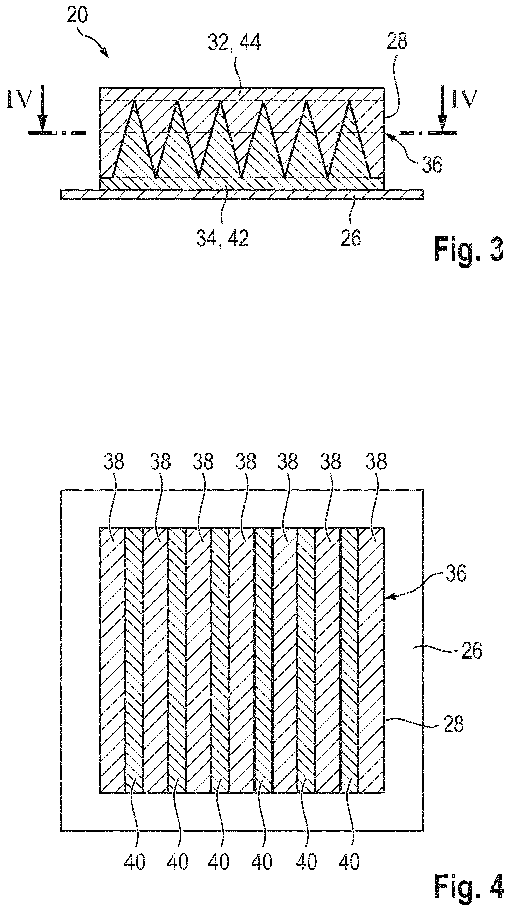

In Figur 3 ist in einer Schnittdarstellung eine der Elektroden 20, in diesem Fall eine der Anoden 16, dargestellt. Die Kathoden 18 sind hierbei beispielsweise ähnlich aufgebaut oder unterschiedlich. Die Elektrode 20 weist einen flachen Träger 26 auf, der aus einer Kupferfolie erstellt ist. Auf eine Seite des Trägers 36 ist eine Schicht 28 aufgetragen. Auf die gegenüberliegende Seite des Träger 26 ist eine weitere Schicht 30 aufgetragen, die spiegelbildlich zu der Schicht 28 ausgestaltet, jedoch nicht gezeigt ist.

Die Schicht 28 besteht aus einem ersten Material 32 und einem zweiten Material 34 und ist im Wesentlichen quaderförmig ausgebildet, wobei eine Dicke der Schicht 28, also die Ausdehnung senkrecht zur Hauptausdehnungsrichtung des Trägers 26, vergleichsweise gering ist und zum Beispiel 50 µm beträgt. Das erste Material 32 und das zweite Material 34 sind jeweils abschnittsweise zackenförmig ausgestaltet und greifen ineinander ein, wobei die beiden Materialien 32, 34 mechanisch direkt aneinander anliegen. Infolgedessen weist die Schicht 28 mehrere zu dem Träger 26 parallele Lagen 36 auf, die mittels eines Schnitts durch die Schicht 28 parallel zu der Ausdehnungsrichtung des Trägers 26 gebildet sind, und von denen eine in der Figur 4 gezeigt ist. und die ineinander übergehen.

Jede Lage 36 ist mittels zueinander paralleler erster Streifen 38 und zueinander paralleler zweite Streifen 40 gebildet. Dabei sind die ersten Streifen 38 sind aus dem ersten Material 32 und die zweiten Streifen 40 aus dem zweiten Material 34. Jeder zweite Streifen 40 ist zwischen jeweils zwei der ersten Streifen 38 angeordnet, sodass jeder zweite Streifen 40 randseitig an jeweils einem der erste Streifen 38 anliegt, und sodass sich die ersten und zweiten Streifen 38, 40 miteinander abwechseln. Hierbei sind die die Schicht 28 außenseitig an zwei gegenüberliegenden Seiten mittels des erste Material 32 begrenzt, also mit jeweils einem der ersten Streifen 38. Aufgrund der zackenförmigen Ausgestaltungen der aufeinander zu gewandten Oberflächen der beiden Materialien 32, 34 ist dabei mit zunehmendem Abstand zu dem Träger die Breite der ersten Streifen 38 vergrößert, wobei die Breite der zweiten Streifen 40, die dazwischen angeordneten sind, verkleinert ist. Hierbei besteht ein linearer Zusammenhang zwischen der Breite und dem Abstand, weswegen die entsprechenden Zacken gebildet sind.

Zudem weist die Schicht 28 eine erste Abschlusslage 42 auf, die an dem Träger 26 direkt anliegt, und die lediglich aus dem zweiten Material 32 besteht. Die Dicke der ersten Abschlusslage 42 beträgt 10 % der Dicke der vollständigen Schicht 28. Die Schicht 28 umfasst ferner eine zweite Abschlusslage 44, die die dem Träger 26 gegenüberliegende Oberfläche der Schicht 28 bildet. Die Oberfläche ist hierbei parallel zum Träger 26. Die zweite Abschlusslage 44 besteht lediglich aus dem ersten Material 32, und die Dicke der zweiten Abschlusslage 44 ist gleich der Dicke der ersten Abschlusslage 42.

Sowohl das erste als auch das zweite Material 32, 34 weisen einen nicht näher dargestellten Binder sowie ein nicht näher dargestelltes Leitadditiv auf, nämlich Leitruß. Auch weist jedes der beiden Materialien 32, 34 ein nicht näher dargestelltes Aktivmaterial auf, das mit dem jeweils zugeordneten Binder und Leitadditiv vermischt ist. Das Aktivmaterial dient hierbei der Aufnahme von Arbeitsionen, nämlich Lithiumionen. Das erste Material 32 unterscheidet sich von dem zweiten Material 34 hinsichtlich des jeweiligen Aktivmaterials. Dabei unterscheiden sich die beiden verwendeten Aktivmaterialien chemisch. Mit anderen Worten wird ein unterschiedliches chemisches Material als jeweiliges Aktivmaterial verwendet. Hierbei ist das Aktivmaterial des zweiten Materials 34 derart ausgestaltet, dass ein vergleichsweise umfangreiches Anlagern der Arbeitsionen erfolgen kann. Auch weist das Aktivmaterial des zweiten Materials 34 eine vergleichsweise hohe Elektronenleitfähigkeit auf. Dahingegen weist das Aktivmaterial des ersten Materials 32 eine vergleichsweise hohe Ionenleitfähigkeit auf, sodass die darin bewegten Ionen, nämlich die Arbeitsionen, eine vergleichsweise hohe Geschwindigkeit aufweisen.

Bei Betrieb, nämlich bei einem Laden der zugeordneten Batteriezelle 14, treffen die Arbeitsionen durch den nicht näher dargestellten Separator auf die dem Träger 26 abgewandte Oberfläche der Schicht 28 und somit auf das erste Material 32. Aufgrund der vergleichsweise hohen lonenleitfähigkeit werden diese vergleichsweise zügig aufgenommen, auch wenn die Oberfläche der Schicht 28 vergleichsweise klein ist. Die Arbeitsionen werden zügig weitergeleitet und treffen auf die Grenzfläche zu dem zweiten Material 34 und treten in dieses ein. Dabei ist die Grenzfläche zwischen den beiden Materialien 32, 34 vergleichsweise groß, zumindest größer als die dem Träger 26 abgewandte Oberfläche der Schicht 28. Somit ist die Anzahl der Arbeitsionen, die gleichzeitig in das zweite Material 34 eindringen können erhöht, weswegen eine Sättigung des ersten Materials 32 mit Arbeitsionen vermieden wird, solange das zweite Material 34 noch nicht gesättigt ist. Somit ist ein Laden der Batteriezelle 14 bis zum vollständigen Ladezustand in einer vergleichsweise kurzen Zeit möglich, wobei die Batteriezelle 14 über einen vergleichsweise großen Zeitraum das gleiche Verhalten aufweist.

Bei einem Entladen der Batteriezelle 14 werden die in dem zweiten Material 34 enthalten Arbeitsionen über die große Grenzfläche in das erste Material 32 abgegeben. Dabei ist zwar die Rate, mit der die Arbeitsionen aus dem zweiten Material 34 abgegeben werden, vergleichsweise gering. Aufgrund der vergleichsweise großen Grenzfläche zu dem ersten Material 32 wird dennoch eine ausreichende Menge der Arbeitsionen abgegeben, die mittels des ersten Material 32 zügig bis zu der Oberfläche der Schicht 28 geleitet wird. Aufgrund der zweiten Abschlusslage 44 ist dabei ein zügiges Aufnehmen und zügiges Abgeben der Arbeitsionen ermöglicht, wobei ein Ausbilden von Spannungen an der dem Träger 26 abgewandte Oberfläche vermieden ist. Aufgrund der ersten Abschlusslage 42 ist hierbei ein zügiges Aufnehmen/Weiterleiten von Elektroden zur dem Träger 26 ermöglicht.

Zusammenfassend umfasst die Schicht 28 mehrere zu dem Träger 26 parallele Lagen 36, die mehrere die zueinander parallelen ersten Streifen 38 aus dem ersten Material 32 aufweist, dass ein das entsprechende Aktivmaterial umfasst. Zwischen den ersten Streifen 38 sind die zweiten Streifen 40 aus dem das entsprechende Aktivmaterial aufweisenden zweiten Material 34 angeordnet. Dabei ist zumindest abschnittsweise mit zunehmendem Abstand zu dem Träger 26 die Breite der ersten Streifen 38 vergrößert und die Breite der zweite Streifen 40 verkleinert. Auch unterscheidet sich das erste Material 32 von dem zweiten Material 34 hinsichtlich des jeweiligen Aktivmaterials. Dabei ist bei dieser Ausgestaltungsform das Aktivmaterial des ersten Materials 32 (chemisch) unterschiedlich zu dem Aktivmaterial des zweiten Materials 34.

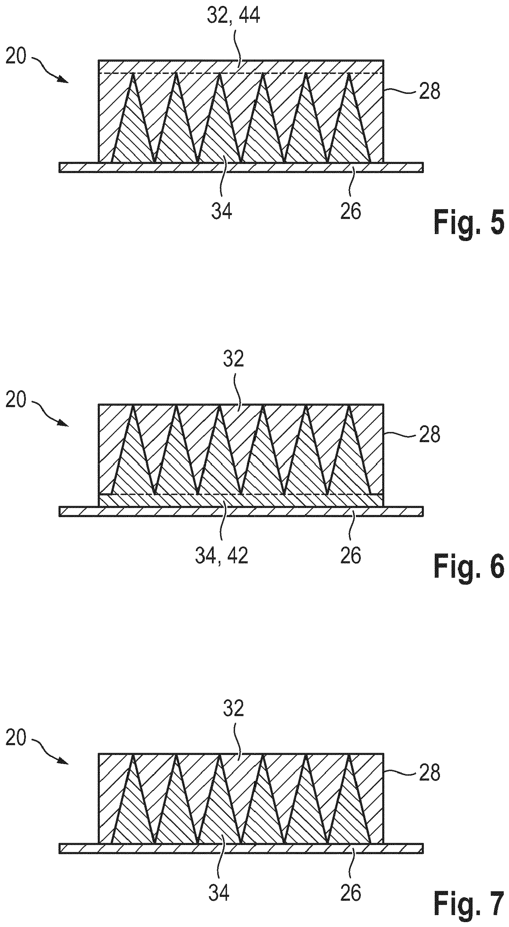

In Figur 5 ist eine Abwandlung der Elektrode 20 dargestellt, wobei im Vergleich zur vorherigen Ausführungsform die erste Abschlusslage 42 weggelassen ist. Auch hier sind die entsprechenden, nicht näher dargestellten Lagen 36 mit den entsprechend ausgestalteten Streifen 38, 40 vorhanden. Dabei reicht das erste Material 32 bis zu dem Träger 26, weswegen die mittels des zweiten Materials 34 bereitgestellten Bereiche zueinander getrennt sind, mittels derer die jeweiligen zweite Streifen 40 gebildet sind. Auch können mittels des ersten Materials 32 zumindest teilweise Elektronen aus dem Träger 26 aufgenommen oder an diesen abgegeben werden. Zudem ist bei dieser Ausgestaltungsform das Aktivmaterial des zweiten Materials 34 chemisch gleich dem Aktivmaterial des ersten Materials 32. Die Aktivmaterialien unterscheidet sich jedoch anhand von physikalischen Eigenschaften, nämlich einer Korngröße, sodass auch hier die entsprechenden Effekte realisiert sind. Eine weitere Änderung bezüglich der in Figur 3 gezeigten Elektrode 30 ist nicht vorhanden.

In Figur 6 ist eine weitere Abwandlung der in Figur 3 dargestellten Elektrode 20 gezeigt, wobei die zweite Abschlusslage 44 weggelassen, jedoch die erste Abschlusslage 42 wiederum vorhanden ist. Infolgedessen reicht das zweite Material 34 bis zu der dem Träger 26 abgewandten Oberfläche, weswegen mittels des zweiten Materials 34 auch direkt die Arbeitsionen aufgenommen werden können. Ferner sind die mittels des ersten Materials 32 bereitgestellten Bereiche, mittels derer jeweils die ersten Streifen 38 gebildet sind, zueinander getrennt. Eine weitere Änderung bezüglich der in Figur 3 gezeigten Elektrode 30 ist nicht vorhanden.

In Figur 7 ist eine weitere Abwandlung der Elektrode 20 dargestellt. Hierbei sind die beiden Abschlusslagen 42, 44 weggelassen, sodass das zweite Material 34 bis zu der dem Träger abgewandten Oberfläche reicht. Auch reicht das erste Material 32 bis zu dem Träger 26. Hier unterscheiden sich erneut die Aktivmaterialien der beiden Materialien 32, 34, wobei das erste Material und das zweite Material jeweils noch ein weiteres Aktivmaterial aufweist, die ebenfalls zueinander unterschiedlich sind. Folglich weist sowohl das erste Material 32 als auch das zweite Material 34 jeweils ein Gemisch aus unterschiedlichen Aktivmaterialien auf, weswegen mittels dieser jeweils zusätzliche weitere Eigenschaften bereitgestellt werden. Eine weitere Änderung bezüglich der in Figur 3 gezeigten Elektrode 30 ist nicht vorhanden.

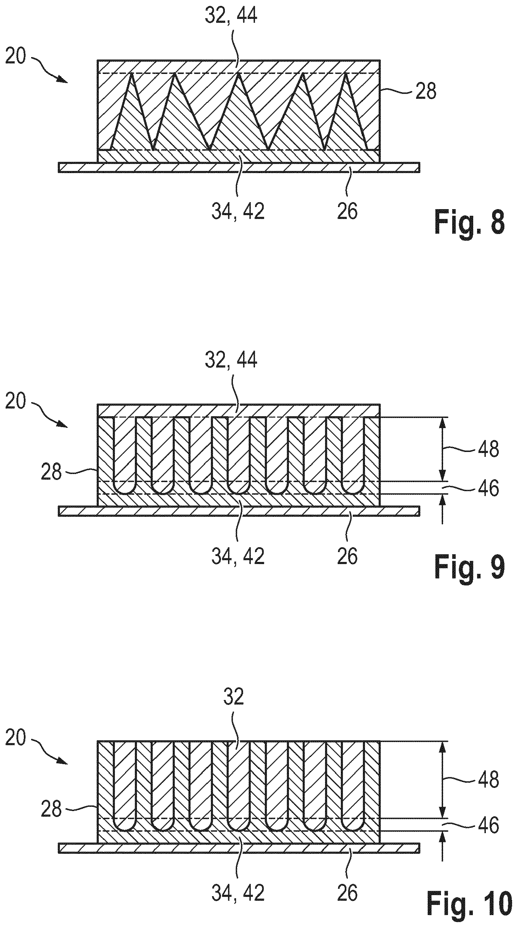

In Figur 8 ist eine weitere Abwandlung der in Figur 3 dargestellten Elektrode 20 dargestellt, Bei dieser sind die im mittleren Bereich der Schicht 28 angeordneten Zacken des Querschnitts verbreitert, sodass auch die Breite der sich dort befindenden Streifen 38, 40 vergrößert ist. Mit anderen Worten ist die Breite der in dem mittleren Bereich der jeweiligen Lage 36 angeordneten Streifen 38, 40 vergrößert. Somit steht dort eine vergrößerte Menge an zusammenhängenden ersten und zweiten Material 32, 34 zur Verfügung. Eine weitere Änderung bezüglich der in Figur 3 gezeigten Elektrode 30 ist nicht vorhanden.

In Figur 9 ist eine weitere Abwandlung der in Figur 3 dargestellten Elektrode 20 dargestellt. Es sind wiederum der Träger 26 und die beiden Abschlusslagen 42, 44 der Schicht 28 vorhanden, die aus dem ersten Material 32 und zweiten Material 34 besteht. Diese entsprechen den beiden in Figur 3 dargestellten Materialien 32, 34. Zwischen den Abschlusslagen 42, 44 befindet sich ein erster Abschnitt 46, der an die erste Abschlusslage 42 angrenzt, und der die Lagen 36 aufweist. Somit sind bei den Lagen 36 des ersten Abschnitts 46 mit zunehmendem Abstand zu dem Träger 26 die Breite der ersten Streifen 38 vergrößern die Breite der zweiten Streifen 40 verkleinert. Dabei besteht zwischen den Breiten und dem Abstand ein trigonometrischer Zusammenhang, weswegen der Querschnitt senkrecht zum Verlauf der Streifen 38, 40 im Wesentlichen U-förmigen ist.

An den ersten Abschnitt 46 schließt sich ein zweiter Abschnitt 48, der bis zu der ersten Abschlusslage 44 reicht. Dieser weist ebenfalls Lagen auf, die parallel zu dem Träger 26 sind. Bei diesen Lagen ist die Breite der Streifen 38, 40 jedoch konstant. Folglich ist der Querschnitt der Schicht 28 im Wesentlichen kamm-förmigen ausgestaltet, wobei das erste und das zweite Material 32, 34 wiederum ineinander eingreift. Bei einer derartigen Ausgestaltungsform sind die Herstellung geringfügig erschwert, wobei jedoch die zwischen den beiden Materialien 32, 34 gebildete Grenzfläche vergrößert ist.

In Figur 10 ist eine Abwandlung der in Figur 9 dargestellten Elektrode 20 dargestellt, wobei die zweite Abschlusslage 44 weggelassen ist. Somit reicht der zweite Abschnitt 48 bis zu der dem Träger 26 abgewandten Oberfläche, weswegen wiederum ein direktes Eindringen der Arbeitsionen in das zweite Material 34 ermöglicht ist.

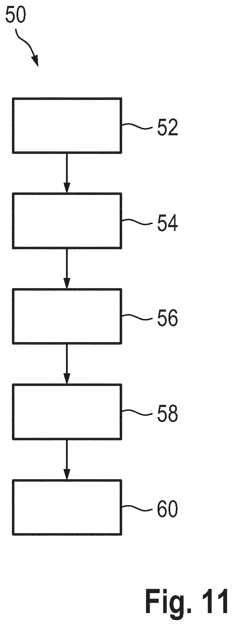

In Figur 11 ist ein Verfahren 50 zur Herstellung der Elektrode 20 dargestellt. In einem ersten Arbeitsschritt 52 wird der Träger 26 bereitgestellt. Hierfür wird beispielsweise eine Rolle, auf der die Kupferfolien aufgerollt ist, abgerollt und zu einer bestimmten Position transportiert. In einem nachfolgenden zweiten Arbeitsschritt 54 wird das zweite Material 34 mittels Druckens auf den Träger 26 aufgebracht. Dabei wird ein 3D-Druckverfahren herangezogen, sodass die zackenartige Ausgestaltung der dem Träger 26 abgewandten Oberfläche des zweiten Materials 34 zumindest teilweise realisiert wird. Alternativ hierzu wird das zweite Material 34 wird mittels Gie-ßens auf den Träger 26 aufgebracht, wobei die Konsistenz des zweiten Materials 34 pastös ist. Hierbei wird eine Maske oder Schablone verwendet, mittels derer zumindest teilweise die Form der Oberfläche des zweiten Materials 34 vorgegeben wird. Nach dem Aufbringen des zweiten Materials 34 auf den Träger 26 wird die Maske entfernt.

In einem sich anschließenden dritten Arbeitsschritt 56 wird das zweite Material 34 kalandriert. Der verwendete Kalander weist hierbei eine Kalanderwalze auf, die Rillen umfasst. Mit anderen Worten wird mittels der Kalanderwalze das zweite Material 34 nicht lediglich plattgedrückt/verdichtet, sondern die Kalanderwalze ist derart ausgestaltet, dass sich die dreidimensionale Form des zweiten Materials 34 ergibt, wie für die jeweilige gewünschte Ausführungsform der Elektrode 20 gewünscht. Nach dem etwaigen Kalandrieren wird das zweite Material 34, sofern erforderlich, ausgehärtet, sodass dieses im Wesentlichen formstabil ist.

In einem sich anschließenden vierten Arbeitsschritt 58 wird das erste Material 32 auf das zweite Material 34 und, je nach Ausführungsform, auf den Träger 26 aufgebracht. Mit anderen Worten wurde das zweite Material 34 vor dem Aufbringen des ersten Materials 32 kalandriert. Zum Aufbringen des ersten Materials 32 wird dieses in einem flüssigen oder pastösen Zustand auf das zweite Material 34 gegossen, sodass die zwischen dem zweitem Materials 34 vorhandenen Zwischenräume vollständig mit dem ersten Material 32 ausgefüllt werden. Bei einer alternativen Ausgestaltungsform wird das erste Material 32 ebenfalls mittels eines Druckverfahrens auf das zweite Material 34 aufgebracht. In einem sich anschließenden fünften Arbeitsschritt 60 wird das erste Material 32 ausgehärtet. Bei einer Weiterbildung wird zudem die auf diese Weise erstellte Schicht 28 erneut kalandriert, sodass die dem Träger 28 abgewandten Oberfläche plan und die Dichte der Schicht 28 erhöht ist.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebenen Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Antrieb
- 8: Energiespeicher
- 10: Schnittstelle
- 12: Gehäuse
- 14: Batteriezelle
- 16: Anode
- 18: Kathode
- 20: Elektrode
- 22: Stromschiene
- 23: Anschluss
- 24: Zellgehäuse
- 26: Träger
- 28: Schicht
- 30: weitere Schicht
- 32: erstes Material
- 34: zweites Material
- 36: Lage
- 38: erster Streifen
- 40: zweiter Streifen
- 42: erste Abschlusslage
- 44: zweite Abschlusslage
- 46: erster Abschnitt
- 48: zweiter Abschnitt
- 50: Verfahren
- 52: erster Arbeitsschritt
- 54: zweiter Arbeitsschritt
- 56: dritter Arbeitsschritt
- 58: vierter Arbeitsschritt
- 60: fünfter Arbeitsschritt

## Patentansprüche

1. Elektrode (20) einer Batteriezelle (14), welche einen flachen Träger (26) aufweist, auf dem eine Schicht (28) aufgetragen ist, wobei die Schicht (28) mehrere zu dem Träger (26) parallele Lagen (36) umfasst, die mehrere zueinander parallele erste Streifen (38) aus einem ein Aktivmaterial aufweisenden ersten Material (32) aufweist, zwischen denen zweite Streifen (40) aus einem ein Aktivmaterial aufweisenden zweiten Material (34) angeordnet sind, wobei zumindest abschnittsweise mit zunehmendem Abstand zu dem Träger (26) die Breite der ersten Streifen (38) vergrößert und die Breite der zweiten Streifen (40) verkleinert ist, und wobei sich das erste Material (32) und das zweite Material (34) hinsichtlich des jeweiligen Aktivmaterials unterscheidet.

2. Elektrode (20) nach Anspruch 1,
**dadurch gekennzeichnet,**
**dass** ein linearer Zusammenhang zwischen der Breite und dem Abstand besteht.

3. Elektrode (20) nach Anspruch 1 oder 2,
**dadurch gekennzeichnet,**
**dass** die Schicht (28) eine erste Abschlusslage (42) aufweist, die an dem Träger (26) anliegt, und die lediglich aus dem zweiten Material (32) besteht.

4. Elektrode (20) nach einem der Ansprüche 1 bis 3,
**dadurch gekennzeichnet,**
**dass** die Schicht (28) eine zweite Abschlusslage (44) aufweist, die die dem Träger (26) gegenüberliegende Oberfläche der Schicht (26) bildet, und die lediglich aus dem ersten Material (32) besteht.

5. Elektrode (20) nach einem der Ansprüche 1 bis 4,
**dadurch gekennzeichnet,**
**dass** die Breite der in einem mittleren Bereich der jeweiligen Lage (36) angeordneten Streifen (38, 40) vergrößert ist.

6. Elektrode (20) nach einem der Ansprüche 1 bis 5,
**dadurch gekennzeichnet,**
**dass** das Aktivmaterial des ersten Materials (32) unterschiedlich zu dem Aktivmaterial des zweiten Materials (34) ist.

7. Elektrode (20) nach einem der Ansprüche 1 bis 6,
**dadurch gekennzeichnet,**
**dass** das erste Material (32) und/oder das zweite Material (34) noch ein weiteres Aktivmaterial aufweist.

8. Verfahren (50) zur Herstellung einer Elektrode (20) nach einem der Ansprüche 1 bis 7, bei welchem
- der Träger (26) bereitgestellt wird,
- auf den Träger (26) das zweite Material (34) aufgebracht wird, und
- auf das zweite Material (34) das erste Material (32) aufgebracht wird.

9. Verfahren (50) nach Anspruch 8,
**dadurch gekennzeichnet,**
**dass** zweite Material (34) mittels Druckens auf den Träger (26) aufgebracht wird.

10. Verfahren (50) nach Anspruch 8 oder 9,
**dadurch gekennzeichnet,**
**dass** zweite Material (34) vor dem Aufbringen des ersten Materials (32) kalandriert wird.
